# EUROPÄISCHE PATENTANMELDUNG

(11) **EP 4 492 526 A1**
(43) Veröffentlichungstag der Anmeldung: **15.01.2025**
(21) Anmeldenummer: 23184797.1
(22) Anmeldetag: 11.07.2023
(51) Int. Cl.: H01M 10/42, H01M 50/20, H01M 50/251, H01M 50/392

(54) **STATIONÄRES AKKUMULATORMODUL**

(71) Anmelder: Intilion AG, 33098 Paderborn (DE)
(72) Erfinder: Jähne, Carsten, 59929 Brilon (DE); Schürmann, Niklas, 59609 Anröchte (DE)
(74) Vertreter: Brinkmann & Partner

(57) **Zusammenfassung**

Die Erfindung betrifft ein stationäres Akkumulatormodul für eine Aufstellung im Außenbereich, mit einem Gehäuse (10), einer Mehrzahl von im Gehäuse (10) angeordneten Akkumulatoren und einer in Höhenrichtung (11) unterhalb des Gehäuses (10) angeordneten Rückhaltewanne (9), wobei die Rückhaltewanne (9) eine Wasserablauföffnung (19) aufweist und wobei ein Ventil (18) zum Öffnen und Schließen der Wasserablauföffnung (19) vorgesehen ist, wobei innerhalb des Gehäuses (10) ein Elektrolytsensor (22) angeordnet ist, wobei der Elektrolytsensor (22) in kommunikationstechnischer Verbindung mit dem Ventil (18) steht und dazu eingerichtet ist, im Elektrolytdetektionsfall das Ventil (18) für ein Schließen der Wasserablauföffnung (19) zu sperren.

## Beschreibung

Die Erfindung betrifft ein stationäres Akkumulatormodul für eine Aufstellung im Außenbereich, mit einem Gehäuse, einer Mehrzahl von im Gehäuse angeordneten Akkumulatoren und einer in Höhenrichtung unterhalb des Gehäuses angeordneten Rückhaltewanne, wobei die Rückhaltewanne eine Wasserablauföffnung aufweist und wobei ein Ventil zum Öffnen und Schließen der Wasserablauföffnung vorgesehen ist.

Stationäre Akkumulatormodule im Allgemeinen sowie stationäre Akkumulatormodule für eine Aufstellung im Außenbereich im Speziellen sind aus dem Stand der Technik an sich gut bekannt, weshalb es eines gesonderten druckschriftlichen Nachweises an dieser Stelle nicht bedarf.

Stationäre Akkumulatormodule verfügen über eine Mehrzahl von Akkumulatoren, beispielsweise Lithium-Ionen-Akkumulatoren, und dienen der Zwischenspeicherung von elektrischer Energie, die im Bedarfsfall wieder abgegeben werden kann. Insbesondere bei der Nutzung erneuerbarer Energien sind stationäre Akkumulatormodule für eine sichere und zuverlässige Stromversorgung von Vorteil, wobei Akkumulatormodule entweder dezentral oder zentral stationiert sein können.

Eine wesentliche Aufgabe zentral stationierter Akkumulatormodule besteht darin, das Stromnetz angesichts fluktuierender Einspeisung von Photovoltaik und Windanalgen stabil und ausfallsicher zu halten. Darüber hinaus ermöglichen in Industrie und Gewerbe dezentral stationierte Akkumulatormodule die Steigerung des Anteils der solaren Selbstversorgung und bieten angesichts stark steigender Energiemarkpreise ökonomische und ökologische Einsparungspotentiale.

Ein gattungsgemäßes Akkumulatormodul verfügt über eine Mehrzahl von Akkumulatoren, die in einem gemeinsamen Gehäuse untergebracht sind. Dabei sind die Akkumulatoren typischerweise in Höhenrichtung übereinander gestapelt innerhalb des Gehäuses angeordnet.

Ein Akkumulatormodul verfügt ferner über eine Rückhaltewanne, die in Höhenrichtung unterhalb des Gehäuses angeordnet ist. Diese Rückhaltewanne dient dazu, aus dem in Höhenrichtung darüber angeordneten Gehäuse austretende Schadstoffe zurückhalten zu können, beispielsweise Verluste an Kühlmittel aus einem die Akkumulatoren kühlenden Kühlsystem. Ein ungehinderter Eintrag von Verlustkühlmittel in die Aufstellumgebung des Akkumulatormoduls kann so in vorteilhafter Weise verhindert werden.

Ein gattungsgemäßes Akkumulatormodul ist für die Aufstellung im Außenbereich geeignet und bestimmt. Im bestimmungsgemäßen Verwendungsfall kann es deshalb infolge von Niederschlägen zu einem Volllaufen der Rückhaltewanne mit Regenwasser kommen. Um ein unkontrolliertes Überlaufen der Rückhaltewanne zu verhindern ist diese mit einer Wasserablauföffnung ausgerüstet. Im Niederschlagsfall sich in der Rückhaltewanne ansammelndes Regenwasser kann so über die Wasserablauföffnung gezielt abgeleitet werden, entweder in eine dafür vorgesehene Kanalisation oder ohne ergänzende bauliche Vorkehrungen direkt in die Umgebungsatmosphäre am Aufstellungsort des Akkumulatormoduls.

Für ein wahlweises Verschließen der Wasserablauföffnung ist es aus dem Stand der Technik bekannt, ein entsprechendes Ventil vorzusehen. Dieses hält die Wasserablauföffnung im bestimmungsgemäßen Verwendungsfall offen. Eine Sperrung der Wasserablauföffnung durch das Ventil findet indes dann statt, wenn es zu einem ungewollten Austritt von Kühlmittel aus dem die Akkumulatoren kühlenden Kühlsystem kommt. Ein ungehinderter Austritt von Kühlmittel über die Wasserablauföffnung in die Umgebungsatmosphäre des Akkumulatormoduls kann so verhindert werden.

Obgleich sich die gattungsgemäße Konstruktion eines stationären Akkumulatormoduls im alltäglichen Praxiseinsatz bewährt hat, besteht Verbesserungsbedarf. Insbesondere ist es erwünscht, unter dem Gesichtspunkt des gesteigerten Umweltschutzes ergänzende Sicherheitsmaßnahmen konstruktiv vorzusehen. Es liegt deshalb der vorliegenden Erfindung die **Aufgabe** zugrunde, ein stationäres Akkumulatormodul konstruktiv dahingehend weiterzuentwickeln, dass bei gleichzeitiger Steigerung der Betriebssicherheit ein umwelttechnisch verbesserter Betrieb ermöglicht ist.

Zur **Lösung** dieser Aufgabe wird mit der Erfindung ein gattungsgemäßes Akkumulatormodul vorgeschlagen, das sich dadurch auszeichnet, dass innerhalb des Gehäuses ein Elektrolytsensor angeordnet ist, wobei der Elektrolytsensor in kommunikationstechnischer Verbindung mit dem Ventil steht und dazu eingerichtet ist, im Elektrolytdetektionsfall das Ventil für ein Schließen der Wasserablauföffnung zu sperren.

Innerhalb des Gehäuses des Akkumulatormoduls ist erfindungsgemäß ein Elektrolytsensor angeordnet. Dieser dient einer Elektrolytdetektion im Falle eines Austritts von Elektrolyt aus einem der vom Gehäuse beherbergten Akkumulatoren. In einem solchen Detektionsfall wird dann durch den Elektrolytsensor eine Sperrung des Ventils veranlasst, so dass es zu einer Schließung der von der Rückhaltewanne bereitgestellten Wasserablauföffnung kommt. In der Konsequenz kann austretender Elektrolyt von der Rückhaltewanne aufgefangen werden, ohne dass die Gefahr eines ungewollten Ablaufs des Elektrolyts über die Wasserablauföffnung besteht. Eine Kontaminierung des Untergrunds mit austretendem Elektrolyt ist so sicher vermieden.

Im Außen- bzw. Outdoor-Bereich besteht die generelle Problematik darin, dass Regenwasser in die Rückhaltewanne tropft. Dieses muss abfließen können, damit die Rückhaltewanne nicht überläuft. Zu diesem Zweck verfügt die Rückhaltewanne über eine Wasserablauföffnung. Für den Fall aber, dass aus einem der vom Gehäuse des Akkumulatormoduls beherbergten Akkumulatoren Elektrolyt austritt, darf kein Elektrolytausritt aus der Rückhaltewanne über die Wasserablauföffnung möglich sein. Um dies zu realisieren, ist die Rückhaltewanne mit einem Ventil ausgerüstet, mittels dem die Wasserablauföffnung wahlweise geöffnet oder geschlossen werden kann. Im bestimmungsgemäßen Verwendungsfall ist das Ventil geöffnet, so dass von der Rückhaltewanne aufgefangenes Regenwasser abfließen kann. Nur für den Fall, dass aus einem der Akkumulatoren ausgetretener Elektrolyt in die Rückhaltwanne abtropft, findet ein Verschluss, d.h. ein Sperren des Ventils statt, so dass der ausgetretene Elektrolyt durch die Rückhaltewanne sicher zurückgehalten wird und nicht in die Umgebungsatmosphäre abströmen kann.

Eine erfindungsgemäße Besonderheit besteht darin, dass der für eine Elektrolytdetektion vorgesehene Elektrolytsensor nicht im Bereich des Ventils oder der Rückhaltewanne, sondern innerhalb des die Akkumulatoren des Akkumulatormoduls beherbergenden Gehäuses angeordnet ist. Hierdurch wird in vorteilhafter Weise eine Früherkennung realisiert, so dass eine Ventilsperrung zur Schließung der Wasserablauföffnung bereits vorgenommen werden kann, bevor überhaupt Elektrolyt in die Rückhaltewanne abtropfen kann. Im Ergebnis ist so ein verbesserter Schutz vor einer ungewollten Kontaminierung des Untergrunds am Aufstellungsort des Akkumulatormoduls erreicht.

Die mit der Erfindung erzielte Früherkennung ergibt sich dadurch, dass im Undichtigkeitsfall aus einem der vom Gehäuse beherbergten Akkumulatoren austretender Elektrolyt im Moment seines Austritts bereits anfängt zu verdampfen. Innerhalb der Gehäuseatmosphäre liegt mithin im Elektrolytaustrittsfall ein gasförmiger Anteil des Elektrolyts vor. Dieser gasförmig vorliegende Anteil des ausgetretenen Elektrolyts wird mittels des innerhalb des Gehäuses angeordneten Elektrolytsensors erfasst, so dass dann im Weiteren aufgrund der kommunikationstechnischen Verbindung zwischen dem Elektrolytsensor und dem Ventil eine sofortige Sperrung des Ventils mit dem Ergebnis erfolgen kann, dass die Wasserablauföffnung geschlossen wird. Der Elektrolytsensor ist dabei in vorteilhafter Weise derart fein abgestimmt, dass schon geringste Mengen an gasförmigem Elektrolyt erkannt werden können und zu einer Sperrung des Ventils führen. Da es die erfindungsgemäße Ausgestaltung ermöglicht, eine Sperrung des Ventils bereits dann zu bewirken, wenn innerhalb der Gehäuseatmosphäre gasförmige Elektrolytanteile detektiert werden und nicht erst dann, wenn sich Elektrolyt in flüssiger Form in der Rückhaltewanne ansammelt, ist eine Früherkennung und damit eine schnelle Reaktionszeit gewährleistet, die eine Ventilsperrung bereits ermöglicht, bevor überhaupt Elektrolyt die Rückhaltewanne erreicht.

Die sensorische Erfassung von in der Gehäuseatmosphäre enthaltenen gasförmigen Elektrolytanteilen bietet ferner den Vorteil, frühzeitig Alarm geben zu können, so dass die dafür verantwortliche Stelle und/oder die dafür verantwortlichen Personen frühzeitig über einen Defekt- oder sogar Havariefall des Akkumulatormoduls informiert sind, was es gestattet, entsprechende Hilfsmaßnahen und/oder Notfallprogramme sehr zeitnah einleiten zu können. Die erfindungsgemäße Ausgestaltung erbringt mithin in synergetischer Weise insbesondere zwei Vorteile. Zum einen ist die Betriebssicherheit verbessert, da ein etwaiger Elektrolytaustritt infolge eines Defektfalls frühzeitig erkannt und ein dementsprechender Alarm ausgegeben werden kann, was es gestattet, frühzeitig erforderliche Gegenmaßnahmen einleiten zu können. Zum anderen wird eine Kontaminierung des Untergrunds am Aufstellungsort des Akkumulatormoduls durch ungewollt austretenden Elektrolyt sicher vermieden, da die für einen Regenwasserablauf vorgesehene Wasserablauföffnung der Rückhaltewanne ventilseitig verschlossen werden kann, bevor etwaig austretender Elektrolyt die Rückhaltewanne erreicht.

Gemäß einem weiteren Merkmal der Erfindung ist vorgesehen, dass der Elektrolytsensor eine Sensoreinheit und eine Vergleichseinrichtung aufweist, wobei die Sensoreinheit dazu eingerichtet ist, etwaigen in der vom Gehäuse umgebenen Atmosphäre enthaltenen Elektrolyt zu detektieren und ein dementsprechendes Signal abzugeben, und wobei die Vergleichseinrichtung dazu eingerichtet ist, dieses Signal mit einem vorgebbaren Vergleichswert zu vergleichen und bei Gleichheit das Ventil zu sperren.

Der Elektrolytsensor verfügt über eine Sensoreinheit und eine Vergleichseinrichtung. Dabei dient die Sensoreinheit der eigentlichen Detektion von etwaigem Elektrolyt, der sich nach einem Austritt aus einem der vom Gehäuse beherbergten Akkumulatoren innerhalb des Gehäuses befindet. Die Vergleichseinrichtung dient der Kommunikation mit dem Ventil der Wasserablauföffnung im Elektrolytaustrittsfall und sorgt für eine Sperrung desselben.

Im einfachsten Fall sind die Sensoreinheit und die Vergleichseinrichtung als einstückiges Bauteil ausgebildet, so dass im Detektionsfall ein von der Sensoreinheit abgegebenes Signal als Auslösesignal zur Sperrung des Ventils dient. In diesem Fall ist der Vergleichswert mit Null vorgegeben, so dass sich bei der Abgabe eines Signals durch die Sensoreinheit im Elektrolytdetektionsfall eine Differenz zu Null ergibt, was dann zu einer automatischen Sperrung des Ventils durch das Signal selbst führt.

Bevorzugt ist es indes, die Auslösegenauigkeit und damit auch die Reaktionszeit in Abhängigkeit vom jeweiligen Anwendungsfall manuell einstellen zu können. Zu diesem Zweck ist vorgesehen, dass die Vergleichseinrichtung als elektronische Baukomponente im Elektrolytdetektionsfall von der Sensoreinheit ein Signal erhält. Dieses Signal wird von der Vergleichseinrichtung mit einem verwenderseitig vorgegebenen Vergleichssignal verglichen. Sofern sich infolge dieses Vergleichs Gleichheit ergibt und/oder das von der Sensoreinheit gelieferte Signal das Vergleichssignal im Wert übersteigt, erfolgt durch die Vergleichseinrichtung eine Sperrung des Ventils. So lange indes das von der Sensoreinheit an die Vergleichseinrichtung gelieferte Signal in seinem Wert unterhalb des vorgebbaren Vergleichssignals bleibt, erfolgt durch die Vergleichseinrichtung keine Ventilsperrung.

Das Vorgeben eines Vergleichssignals schafft mithin die Möglichkeit, die Detektionssensibilität ergänzend elektronisch einstellen zu können. Insbesondere ist es möglich, eine solche Feineinstellung des Elektrolytsensors vorzunehmen, dass dieser bereits bei kleinstem Mengen an ausgetretenem Elektrolyt anschlägt und eine dementsprechende Ventilsperrung vornimmt, womit eine Sperrung des Ventils erreicht ist, lange bevor ausgetretener Elektrolyt überhaupt die Rückhaltewanne erreicht. Dies erbringt zusätzliche Sicherheit, einen ungewollten Elektrolytaustritt zu verhindern und damit eine Kontamination des Untergrunds am Aufstellungsort sicher zu vermeiden.

Gemäß einem weiteren Merkmal der Erfindung ist vorgesehen, dass die Sensoreinheit und die Vergleichseinrichtung zu einer elektronischen Baukomponente zusammengefasst sind. Es kann insbesondere vorgesehen sein, dass die Vergleichseinrichtung integraler Bestandteil der Sensoreinheit ist. Zudem ist es bevorzugt, die Sensoreinheit und die Vergleichseinrichtung auf einer gemeinsamen elektronischen Steuerkarte anzuordnen, was eine einfache Montage gewährleistet, im Defektfall eine vereinfachte Montage bzw. Demontage ermöglicht und zudem eine unter Umständen notwendige Stromversorgung sowohl für die Sensoreinheit als auch für die Vergleichseinrichtung gleichermaßen sicherstellt. Dabei ist der die Sensoreinheit und die Vergleichseinrichtung aufweisende Elektrolytsensor bevorzugterweise als einstückige Baukomponente ausgebildet.

Gemäß einem weiteren Merkmal der Erfindung ist vorgesehen, dass die Sensoreinheit einen Gassensor aufweist.

Der in den Akkumulatoren des Akkumulatormoduls beherbergte Elektrolyt liegt im bestimmungsgemäßen Verwendungsfall in flüssiger Form vor. Kommt es zu einem ungewollten Elektrolytaustritt aus einem der Akkumulatormodule, so findet bereits im Moment des Elektrolytaustritts ein Verdampfen des Elektrolyts statt. Ein Anteil des austretenden Elektrolyts liegt mithin in gasförmiger Phase vor. Zwecks Detektion dieser gasförmigen Phase weist die Sensoreinheit einen Gassensor auf. Der Vorteil dieser Ausgestaltung liegt insbesondere darin, dass aufgrund der Detektion des gasförmigen Anteils des ausgetretenen Elektrolyts eine Elektrolytdetektion bereits möglich ist, bevor flüssige Anteile des ausgetretenen Elektrolyts der Schwerkraft folgend nach unten abgetropft oder abgeströmt sind und die Rückhaltewanne erreicht haben. Es ist so in einfacher Weise eine sehr effektive Früherkennung erreicht, da im Moment eines Elektrolytaustritts gasförmig entstehende Anteile des Elektrolyts detektiert werden können, es mithin nicht erst dann zu einer Elektrolytdetektion kommt, wenn flüssige Elektrolytanteile bereits die Rückhaltewanne erreicht haben.

Der Gassensor ist bevorzugterweise im Bereich des in Höhenrichtung unteren Akkumulators des Akkumulatormoduls angeordnet. Dies deshalb, um auch in Höhenrichtung nach unten absackende gasförmige Anteile ausgetretenen Elektrolyts sicher erfassen zu können. Um die Detektionsschnelligkeit und -genauigkeit zusätzlich zu erhöhen, kann die Sensoreinheit über eine Mehrzahl von Gassensoren verfügen, die in Höhenrichtung des Akkumulatormoduls in unterschiedlichen Höhenabständen zur Rückhaltewanne angeordnet sind. Insbesondere kann es in diesem Zusammenhang vorgesehen sein, dass ein in Höhenrichtung unterer Gassensor, ein in Höhenrichtung oberer Gassensor sowie ein in Höhenrichtung zwischen dem unteren Gassensor und dem oberen Gassensor angeordneter mittlerer Gassensor innerhalb des Gehäuses des Akkumulatormoduls angeordnet sind. Die Zuverlässigkeit einer Elektrolytdetektion wird so zusätzlich erhöht.

Des Weiteren kann vorgesehen sein, dass die Sensoreinheit auch über einen Flüssigkeitssensor zur Elektrolytdetektion verfügt. Dieser Flüssigkeitssensor kann innerhalb der Rückhaltewanne angeordnet sein. Auch hierdurch wird eine zusätzliche Sicherheit geschaffen, beispielsweise für den Fall, dass eine Elektrolytundichtigkeit eines der vom Akkumulatormodul beherbergten Akkumulatoren dadurch entstanden ist, dass eine mechanische Gewalteinwirkung auf das Akkumulatormodul mit der Folge stattgefunden hat, dass auch das die Akkumulatoren bereitstellende Gehäuse einen Defekt aufweist, aufgrund dessen gasförmige Anteile eines austretenden Elektrolyts direkt in die das Gehäuse umgebende Atmosphäre abgegeben werden und eine Detektion durch einen zur Sensoreinheit gehörenden Gassensor nicht mehr möglich ist. Ein zusätzlich vorgesehener Flüssigkeitssensor ist zudem aus Gründen der Redundanz von Vorteil, insbesondere für den Fall, dass ein Gassensor der Sensoreinheit einen Defekt aufweist.

Gemäß einem weiteren Merkmal der Erfindung ist vorgesehen, dass das Ventil ein magnetschaltendes Ventil ist, mithin ein Magnetventil. Es ist in diesem Zusammenhang bevorzugt, dass das Magnetventil im bestimmungsgemäßen Verwendungsfall an Dauerstrom anliegt und geöffnet ist. Dabei wird das Ventil entgegen einer auf das Ventil einwirkenden Rückstellkraft infolge der Dauerbestromung in geöffnetem Zustand gehalten. Kommt es im Elektrolytdetektionsfall zu einer entsprechenden Signalabgabe durch den Elektrolytsensor, so führ dies zu einer Trennung des Ventils von seiner Stromversorgung, infolge dessen das Ventil sperrt und somit die Wasserablauföffnung geschlossen wird. Eine solche Ausgestaltung hat den Vorteil, dass eine Ventilsperrung auch dann erfolgt, wenn - aus welchem Grunde auch immer - eine Stromversorgung des Ventils unterbleibt. Dies ist deshalb von Vorteil, weil im Falle einer ungewollten Stromunterbrechung unter Umständen auch die Funktionsweise des Elektrolytsensors nicht mehr sichergestellt ist, so dass in diesem Fall eine vorsorgliche Sperrung des Ventils erfolgt. Sobald eine Stromversorgung wieder hergestellt ist, d.h. eine ordnungsgemäße Funktionsweise des Elektrolytsensors gewährleistet ist, erfolgt auch eine erneute Öffnung des Ventils.

Gemäß einem weiteren Merkmal der Erfindung ist eine Kühleinrichtung vorgesehen, die über einen Kühlkreislauf verfügt, welcher der Umwälzung eines Kühlmittels dient.

Für eine bestimmungsgemäße Nutzung des Akkumulatormoduls bedarf es je nach Anwendungsfall und Aufstellungsort einer Kühlung der einzelnen Akkumulatoren des Akkumulatormoduls. Zu diesem Zweck verfügt das Akkumulatormodul über eine Kühleinrichtung. Diese Kühleinrichtung stellt ein in einem Kühlkreislauf umgewälztes Kühlmittel zur Verfügung, das im bestimmungsgemäßen Verwendungsfall von den einzelnen Akkumulatoren des Akkumulatormoduls abgegebene Abwärme aufnimmt und so zu einer Kühlung der Akkumulatoren beiträgt. Als Kühl- oder Kältemittel kommt insbesondere Glykol zum Einsatz.

Eine solche Kühleinrichtung sorgt in vorteilhafter Weise für eine Temperaturhaltung innerhalb des Akkumulatormoduls, die für einen bestimmungsgemäßen Betrieb der Akkumulatoren optimiert ist. Ein effizienter Einsatz des Akkumulatormoduls ist so in vorteilhafter Weise erreicht. Gemäß einem weiteren Merkmal der Erfindung ist vorgesehen, dass das Ventil mit einem Kühlmittelsensor in kommunikationstechnischer Verbindung steht.

Gemäß dieser erfindungsgemäßen Weiterbildung ist nicht nur ein Elektrolytsensor, sondern auch ein Kühlmittelsensor vorgesehen. Dabei dient der Kühlmittelsensor dazu, einen etwaigen Austritt von Kühlmittel aus dem Kühlkreislauf der Kühleinrichtung detektieren zu können. Ebenso wie der Elektrolytsensor steht auch der Kühlmittelsensor mit dem Ventil in kommunikationstechnischer Verbindung. Dies gestattet es, dass im Falle eines Austritts von Kühlmittel ebenfalls eine Sperrung des Ventils stattfinden kann, so dass auch im Falle eines Kühlmittelaustritts eine Schließung der Wasserablauföffnung stattfindet.

Gemäß einem weiteren Merkmal der Erfindung ist vorgesehen, dass der Kühlmittelsensor dazu eingerichtet ist, im Kühlmitteldetektionsfall das Ventil für ein Schließen der Wasserablauföffnung zu sperren.

Gemäß dieser erfindungsgemäßen Weiterbildung findet ein Schließen des mit der Wasserablauföffnung zusammenwirkenden Ventils sowohl im Elektrolytdetektionsfall als auch im Kühlmitteldetektionsfall statt. Das Akkumulatormodul ist mithin in zweifacher Hinsicht abgesichert. Dabei wirken der Kühlmittelsensor einerseits und der Elektrolytsensor andererseits mit ein und demselben Ventil zusammen, was die erfindungsgemäße Ausgestaltung in der Konstruktion, der Herstellung und einer Montage besonders einfach macht. Da das Ventil bei einer sensorinitiierten Unterbrechung der Stromversorgung des Ventils schließt, können sich etwaige von den beiden Sensoren unter Umständen gleichzeitig abgegebene Signale auch nicht behindern, da durch eine Stromlosstellung des Ventils eine Schließung der zugehörigen Wasserablauföffnung in jedem Fall stattfindet. Die erfindungsgemäße Ausgestaltung erbringt mithin synergetischen Schutz vor einer ungewollten Kontamination des Untergrunds am Aufstellungsort des Akkumulatormoduls, indem ein ungewollter Austritt sowohl von Elektrolyt als auch von Kühlmittel sicher unterbunden ist.

Bei dem Kühlmittelsensor handelt es sich vorzugsweise um einen Flüssigkeitssensor, der innerhalb der Rückhaltewanne angeordnet ist. Austretendes Kühlmittel liegt in der Regel ausschließlich oder vorwiegend in flüssiger Form vor und tropft im Austrittsfall nach unten in die Rückhaltewanne und wird von dieser in bestimmungsgemäßer Weise zurückgehalten. Das Vorhandensein von Kühlmittel innerhalb der Rückhaltewanne wird von dem Kühlmittelsensor erfasst, was dann in schon vorbeschriebener Weise zu einer Sperrung des Ventils führt. Um sicherzustellen, dass etwaiges in die Rückhaltewanne gelangtes Kühlmittel auch sicher vom Sensor erfasst wird, ist dieser bevorzugterweise im Bereich des Ventils angeordnet, ggf. in unmittelbarer Nähe zum Ventil und/oder als integraler Bestandteil des Ventils ausgebildet. Anders als im Falle einer Elektrolytdetektion findet mithin ein Schließen des Ventils aufgrund einer Kühlmitteldetektion erst dann statt, wenn das Kühlmittel die Rückhaltewanne bereits erreicht hat und sich in unmittelbarer Nähe zum Ventil befindet.

Gemäß einem weiteren Merkmal der Erfindung ist von der Rückhaltewanne ein Pegelsensor bereitgestellt, der dazu eingerichtet ist, den Pegelstand einer sich in der Rückhaltewanne ansammelnden Flüssigkeit zu erfassen.

Im bestimmungsgemäßen Verwendungsfall kann sich die zum Rückhalt von ausgetretenem Elektrolyt und/oder zum Rückhalt von ausgetretener Kühlflüssigkeit vorgesehene Rückhaltewanne mit Regenwasser füllen. Um ein Abströmen des Regenwassers aus der Rückhaltewanne heraus zu ermöglichen, verfügt die Rückhaltewanne in schon vorbeschriebener Weise über eine Wasserablauföffnung, die mittels eines Ventils geschlossen werden kann. Auch im bestimmungsgemäßen Verwendungsfall des erfindungsgemäßen Akkumulatormoduls kann es zu einem Verschluss der Ablauföffnung beispielsweise durch Verunreinigungen, Verschmutzungen und/oder dgl. kommen. In diesem Fall findet trotz geöffnetem Ventil kein Ablauf von sich in der Rückhaltewanne ansammelnden Regenwasser statt. Kommt es nun bei einer mit Regenwasser gefüllten Rückhaltewanne zu einem ungewollten Elektrolytaustritt und/oder einem ungewollten Kühlmittelaustritt, so mag dies durch die entsprechenden Sensoren zwar detektiert werden können, eine ungewollte Kontamination des Untergrunds am Aufstellungsort kann jedoch gleichwohl nicht vermieden werden, da die schon mit Regenwasser gefüllte Rückhaltewanne aufgrund der verstopften Wasserablauföffnung überläuft. Trotz einer sensorbedingten Ventilschließung kann es so zu einem Austritt von Elektrolyt und/oder Kühlmittel in die Umgebungsatmosphäre kommen. Um dies zu verhindern, ist ein Pegelsensor vorgesehen, der dazu eingerichtet ist, den Pegelstand einer sich in der Rückhaltewanne ansammelnden Flüssigkeit zu detektieren. Es kann so sensorisch erfasst werden, ob sich die Rückhaltewanne ggf. mit Regenwasser gefüllt hat und ein Überlaufen der Rückhaltewanne droht.

Gemäß einem weiteren Merkmal der Erfindung ist in diesem Zusammenhang ein Alarmgeber vorgesehen, der in kommunikationstechnischer Verbindung mit dem Elektrolytsensor, dem Kühlmittelsensor und/oder dem Pegelsensor steht.

Im Falle beispielsweise eines zu hohen Pegelstandes innerhalb der Rückhaltewanne wird dies durch den Pegelsensor detektiert und der in kommunikationstechnischer Verbindung mit dem Pegelsensor stehende Alarmgeber gibt ein Alarmsignal aus, entweder direkt in der unmittelbaren Umgebung zum Akkumulatormodul und/oder an eine räumlich entfernt zum Akkumulatormodul ausgebildeten Leit- und Überwachungseinrichtung. Zudem kann bei einem ermittelten Höchstpegelstand eine automatische Abschaltung des Akkumulatormoduls eingeleitet werden, so dass ein bestimmungsgemäßer Betrieb des Akkumulatormoduls erst wieder möglich ist, wenn eine unter Umständen verstopfte Wasserablauföffnung verwenderseitig gereinigt und eine ordnungsgemäße Funktion des Ventils sichergestellt und überprüft ist.

Der Alarmgeber kann visuell und/oder akustisch arbeiten. Bevorzugt ist eine Kombination aus visuellem und akustischem Alarmsignal.

Der Alarmgeber kann ferner mit dem Elektrolytsensor und/oder dem Kühlmittelsensor in kommunikationstechnischer Verbindung stehen. Dabei wird bevorzugterweise immer dann über den Alarmgeber ein Alarm ausgelöst, wenn der Elektrolytsensor ausgetretenen Elektrolyt detektiert und/oder der Kühlmittelsensor ausgetretenes Kühlmittel erfasst. In jedem Fall kann eine automatische Abschaltung des Akkumulatormoduls vorgesehen sein, wenn durch einen der Sensoren ein entsprechender Austritt erfasst wird. Eine Wiederinbetriebnahme des Akkumulatormoduls kann dann erst wieder stattfinden, wenn verwenderseitig eine Überprüfung durchgeführt und eine ordnungsgemäße Funktionsweise des Akkumulatormoduls wiederhergestellt und/oder bestätigt worden ist.

Mit der Erfindung wird ferner vorgeschlagen ein Verfahren zum Betrieb eines Akkumulatormoduls der vorbeschriebenen Art, bei dem die Gehäuseatmosphäre vom Elektrolytsensor überwacht wird, bei dem im Elektrolytdetektionsfall ein entsprechendes Signal vom Elektrolytsensor abgegeben wird und bei dem das Ventil aufgrund des vom Elektrolytsensors abgegebenen Signals für ein Schließen der Wasserablauföffnung gesperrt wird.

Eine solche Verfahrensdurchführung erbringt die schon vorstehend anhand des Akkumulatormoduls erläuterten Vorteile.

Verfahrensseitig wird gemäß einem weiteren Merkmal der Erfindung vorgeschlagen, dass eine von der Rückhaltewanne zurückgehaltene Flüssigkeit vom Kühlmittelsensor überwacht wird, bei dem im Kühlmitteldetektionsfall ein entsprechendes Signal vom Kühlmittelsensor abgegeben wird und bei dem das Ventil aufgrund des vom Kühlmittelsensors abgegebenen Signals für ein Schließen der Wasserablauföffnung gesperrt wird.

Des Weiteren wird mit der Erfindung ein Verfahren vorgeschlagen, bei dem der Pegelstand einer sich in der Rückhaltewanne ansammelnden Flüssigkeit vom Pegelsensor überwacht wird, bei dem im Falle der Detektion eines vorgebbaren Pegelmaximalstandes ein entsprechendes Signal vom Pegelsensor abgegeben wird und bei dem ein Alarmgeber aufgrund des vom Pegelsensors abgegebenen Signals eingeschaltet wird.

Die mit den Verfahrensweiterentwicklungen einhergehenden Vorteile ergeben sich gleichfalls aus der schon vorstehenden Beschreibung anhand des erfindungsgemäßen Akkumulatormoduls.

Weitere Merkmale und Vorteile der Erfindung ergeben sich aus der nachfolgenden Beschreibung anhand der Figuren. Dabei zeigen
- Fig. 1: in schematisch perspektivischer Ansicht eine Akkumulatoreinrichtung mit einer Mehrzahl von erfindungsgemäßen Akkumulatormodulen;
- Fig. 2: in schematisch perspektivischer Ansicht die Unterkonstruktion der Akkumulatoreinrichtung nach Figur 1;
- Fig. 3: in einer schematischen Darstellung eine erfindungsgemäße Funktionsweise und
- Fig. 4: in einem schematischen Ablaufdiagramm eine erfindungsgemäße Verfahrensdurchführung.

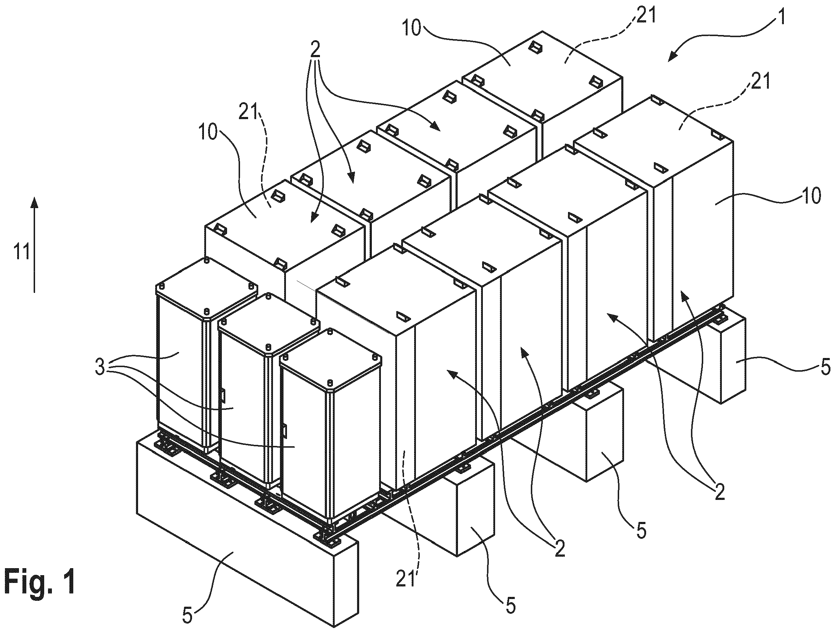

Figur 1 lässt in schematisch perspektivischer Ansicht eine Akkumulatoreinrichtung 1 erkennen. Diese verfügt über eine Mehrzahl von erfindungsgemäßen Akkumulatormodulen 2 und weiteren elektronischen Einrichtungen 3.

Jedes der Akkumulatormodule 2 verfügt über ein Gehäuse 10, das eine jeweilige Gehäuseatmosphäre 21 umgibt. Innerhalb eines jeden Gehäuses 10 sind eine Mehrzahl von in den Figuren nicht näher dargestellten Akkumulatoren untergebracht, die vorzugsweise in Höhenrichtung 11 übereinander angeordnet sind.

Die in Figur 1 gezeigte Akkumulatoreinrichtung 1 verfügt über eine Mehrzahl von Akkumulatormodulen 2, wobei jedes Akkumulatormodul 2 seinerseits über eine Mehrzahl von Akkumulatoren verfügt, womit die Akkumulatoreinrichtung 1 insgesamt eine Vielzahl von Akkumulatoren bereitstellt. Bei den von der Akkumulatoreinrichtung 1 bereitgestellten Akkumulatoren kann es sich beispielsweise um Lithium-Ionen-Akkumulatoren handeln.

Die Akkumulatoreinrichtung 1 dient der Zwischenspeicherung von elektrischer Energie, beispielsweise der Zwischenspeicherung von durch regenerative Energiequellen erzeugter elektrischer Energie. Diese kann mittels der Akkumulatoreinrichtung 1 zwischengespeichert und so für eine spätere Verwendung bereitgestellt werden. Die Akkumulatoreinrichtung 1 dient mithin als Energiepufferspeicher.

Die Akkumulatoreinrichtung 1 ist stationär ausgebildet. Mithin handelt es sich auch bei den einzelnen Akkumulatormodulen 2 der Akkumulatoreinrichtung 1 um stationäre Akkumulatormodule 2.

Am Aufstellungsort der Akkumulatoreinrichtung 1 ist für eine standortsichere Lagepositionierung und Ausrichtung der einzelnen Akkumulatormodule 2 eine Trageinrichtung 4 vorgesehen, die von einem Fundament aus einzelnen Fundamentstreifen 5 abgestützt ist.

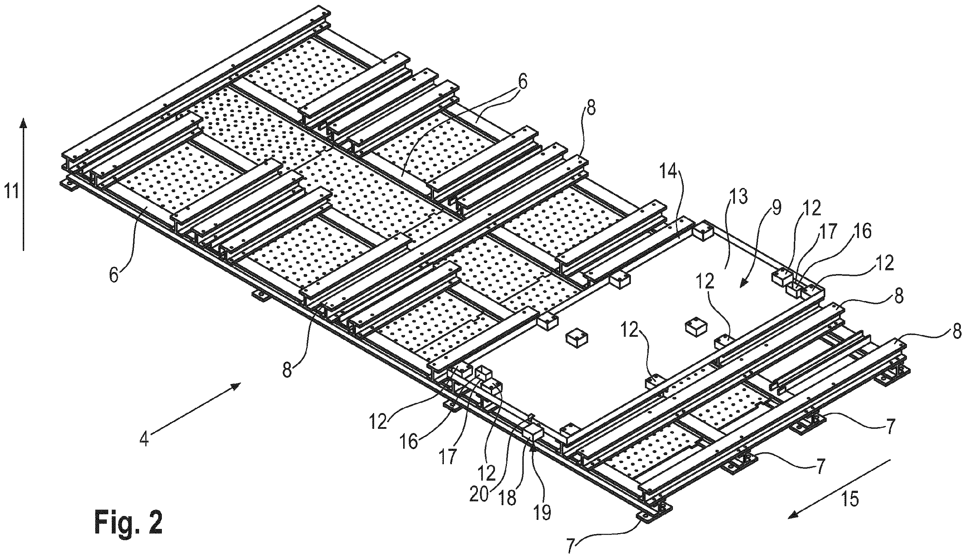

Die Trageinrichtung 4 ergibt sich aus der Darstellung nach Figur 2.

Die Trageinrichtung 4 verfügt über einzelne Längsbalken 6, die im gezeigten Ausführungsbeispiel als Doppel-T-förmig ausgebildete Stahlträger vorliegen. Diese sind über Anschlussstücke 7 mit den einzelnen Fundamentstreifen 5 verschraubt.

In Höhenrichtung 11 oberhalb der Längsbalken 6 sind Querbalken 8 vorgesehen, die ebenfalls als Doppel-T-förmig ausgebildete Stahlträger vorliegen. Diese sind mit den Längsbalken 6 verbunden, beispielsweise verschraubt und/oder verschweißt.

In Höhenrichtung 11 oberhalb der Querbalken 8 sind Rückhaltewannen 9 angeordnet, wobei die Darstellung nach Figur 2 der besseren Übersicht wegen nur eine solche Rückhaltewanne 9 erkennen lässt. Dabei wirkt im gezeigten Ausführungsbeispiel eine Rückhaltewanne 9 mit zwei Akkumulatormodulen 2 zusammen.

Zur Abstützung der Akkumulatormodule 2 durch eine Rückhaltewanne 9 sind Sockelelemente 12 vorgesehen, die von der Rückhaltewanne 9 bereitgestellt sind, wobei die Sockelelemente 12 derart innerhalb der Rückhaltewanne 9 positioniert sind, dass sie durch unterhalb der Rückhaltewanne 9 angeordnete Querbalken 8 abgestützt sind. Die Akkumulatormodule 2 sind mithin unter Zwischenordnung der Rückhaltewanne 9 von der Trageinrichtung 4 abgestützt.

Die Rückhaltewanne 9 kann vorzugsweise als abgekantetes Blechteil ausgebildet sein. Sie verfügt über ein Bodenteil 13 und eine umlaufende Randkante 14. Sie ist nach Art einer einseitig offenen Schale ausgebildet und vermag im Falle eines Austritts von Elektrolyt und/oder Kühlmittel aus einem von einem Akkumulatormodul 2 beherbergten Akkumulator Elektrolyt und/oder Kühlmittel zurückzuhalten, sodass eine ungewollte Kontamination des Untergrunds am Aufstellungsort der Akkumulatoreinrichtung 1 verhindert ist.

Wie die Darstellung nach Figur 2 erkennen lässt, wirkt die dort gezeigte Rückhaltewanne 9 mit zwei in Querrichtung 15 hintereinander angeordneten Akkumulatormodulen 2 zusammen, wobei natürlich auch andere Konstellationen denkbar sind. Von entscheidender Bedeutung ist indes, dass in Höhenrichtung 11 unterhalb eines jeden Akkumulatormoduls 2 eine Rückhaltewanne 9 vorgesehen ist, sodass Elektrolyt und/oder Kühlmittel aufgegangen werden kann, wenn ein diesbezüglicher ungewollter Austritt aus einem der vom Akkumulatormodul 2 beherbergten Akkumulatoren stattfindet.

Für eine Kabelzuführung zu den einzelnen Akkumulatormodulen 2 bzw. den davon beherbergten Akkumulatoren ist das Bodenteil 13 der Rückhaltewanne 9 mit Durchbrüchen 16 ausgerüstet. Um ein ungewolltes Abströmen von mittels der Rückhaltewanne 9 zurückgehaltenen Flüssigkeiten durch die Durchbrüche 16 zu vermeiden, ist ein jeder Durchbruch 16 mit einer Umrandung 17 ausgerüstet, die eine Höhenerstreckung aufweist, die derjenigen der Randkante 14 entspricht.

Die Akkumulatoreinrichtung 1 ist insbesondere dafür ausgebildet, im Außenbereich, d. h. im Outdoor-Bereich verwendet zu werden. Im bestimmungsgemäßen Verwendungsfall kommt es deshalb dazu, dass sich Regenwasser innerhalb der Rückhaltewanne 9 ansammelt. Um ein Überlaufen von Regenwasser zu vermeiden, ist die Rückhaltewanne 9 mit einer Wasserablauföffnung 19 ausgerüstet. Im Regenfall kann sich in der Rückhaltewanne 9 ansammelndes Regenwasser über die Ablauföffnung 19 abgeführt werden, beispielsweise in eine sich an die Wasserablauföffnung 19 anschließende und in den Figuren nicht im Einzelnen dargestellte Kanalisation.

Die Wasserablauföffnung 19 ist mit einem Ventil 18, vorzugsweise einem Magnetventil ausgerüstet. Mittels des Ventils 18 kann eine wahlweise Sperrung der Wasserablauföffnung 19 erfolgen, sodass die Wasserablauföffnung 19 bei gesperrtem Ventil 18 geschlossen ist und ein Austritt einer sich in der Rückhaltewanne 9 befindlichen Flüssigkeit in die Umgebungsatmosphäre verhindert ist.

Ein jedes Akkumulatormodul 2 verfügt über einen Elektrolytsensor 22, der innerhalb des Gehäuses 10 des Akkumulatormoduls 2 angeordnet ist. Dabei steht der Elektrolytsensor 22 in kommunikationstechnischer Verbindung mit dem Ventil 18 und ist dazu eingerichtet, im Elektrolytdetektionsfall das Ventil 18 für ein Schließen der Wasserablauföffnung 19 zu sperren. Kommt es also zu einem ungewollten Elektrolytaustritt aus einem der von einem Akkumulatormodul 2 bereitgestellten Akkumulatoren, so wird dies mittels des zugehörigen Elektrolytsensors 22 erkannt und es findet eine augenblickliche Schließung der Wasserablauföffnung 19 durch die Sperrung des der Wasserablauföffnung 19 zugeordneten Ventils 18 statt. Hierdurch ist sichergestellt, dass sich im Defektfall innerhalb der Rückhaltewanne 9 ansammelnder Elektrolyt nicht ungewollt über die Wasserablauföffnung 19 in die Umgebungsatmosphäre abfließen kann.

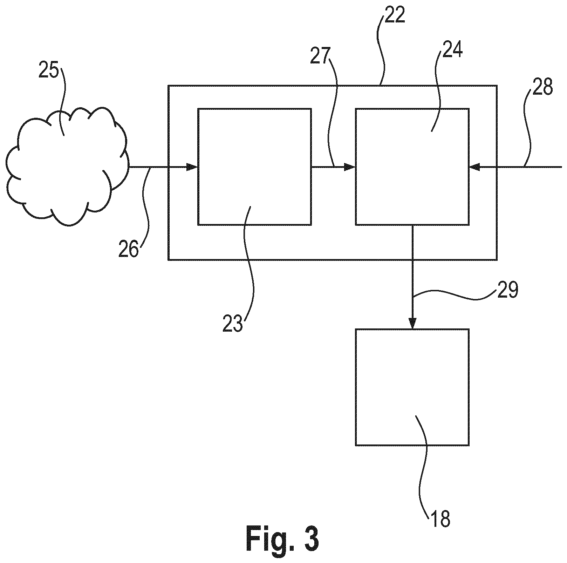

Eine erfindungsgemäße Funktionsweise ist in Figur 3 schematisch dargestellt. Danach verfügt der Elektrolytsensor 22 über eine eigentliche Sensoreinheit 23 und eine Vergleichseinrichtung 24, wobei die Sensoreinheit 23 einen Gassensor umfasst. Dieser Gassensor ist innerhalb der von einem Gehäuse 10 eine Akkumulatoreinheit 2 umgebenden Gehäuseatmosphäre 21 angeordnet. Im Austrittsfall von Elektrolyt aus einem der vom Gehäuse 10 beherbergten Akkumulatoren kommt es zu einer Verdampfung des flüssigen Elektrolyts, sodass ein gasförmiger Elektrolytanteil 25 entsteht. Dieser wird mittels der Sensoreinheit 23 detektiert. Die Sensoreinheit 23 gibt ein der Detektion entsprechendes Signal 27 an die Vergleichseinrichtung 24 ab. Diese vergleicht das Signal 27 mit einem verwenderseitig vorgebbaren Vergleichssignal 28. Im Falle der Gleichheit und/oder einem Überschreiten des Werts des Signals 27 in Relation zum Wert des vorgebbaren Vergleichssignals 28 gibt die Vergleichseinrichtung 24 ein Sperrsignal 29 aus, das zu einer Sperrung des Ventils 18 und damit zu einem Schließen der Wasserablauföffnung 19 führt.

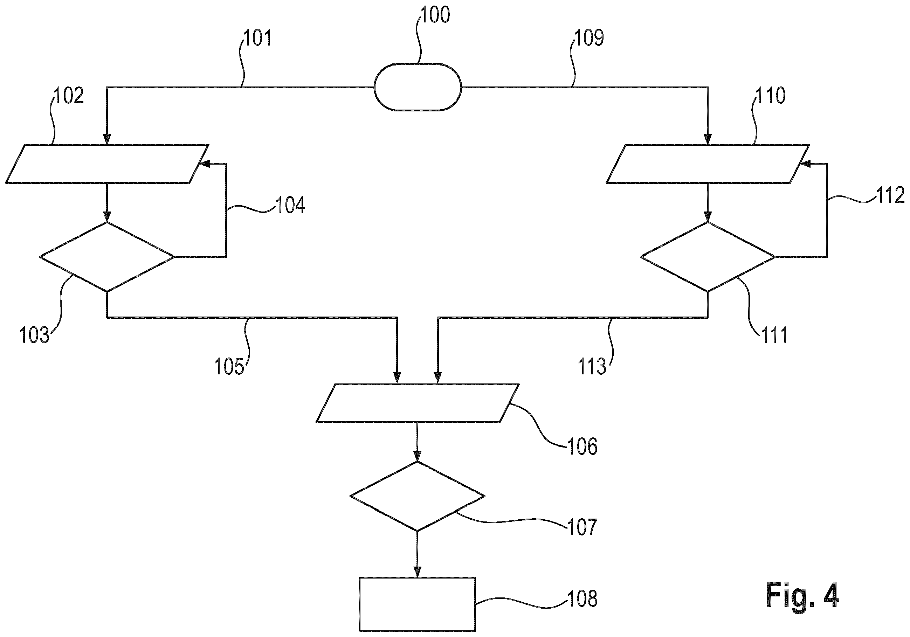

Bevorzugterweise verfügt ein Akkumulatormodul 2 nicht nur über einen Elektrolytsensor 22. Es ist vielmehr bevorzugt, wenn die zugehörige Rückhaltewanne 9 zudem einen Kühlmittelsensor 20 aufweist, der vorzugsweise in unmittelbarer Nähe zum Ventil 18 ausgebildet ist, wie dies die Darstellung nach Figur 2 erkennen lässt. Dabei dient der Kühlmittelsensor 20 dazu, ein aus einer Kühleinrichtung eines Akkumulatormoduls 2 unter Umständen ausgetretenes Kühlmittel detektieren zu können. Sobald eine solche Kühlmitteldetektion stattfindet, erfolgt durch den Kühlmittelsensor 20 ein Verschließen des Ventils 18. Die Wasserablauföffnung 19 wird mithin nicht nur im Elektrolytdetektionsfall, sondern auch im Kühlmitteldetektionsfall geschlossen. Eine insoweit erfindungsgemäße Verfahrensdurchführung ergibt sich aus dem Ablaufdiagramm gemäß Figur 4.

Das erfindungsgemäße Verfahren startet bei 100. Gemäß dem Pfeil 101 findet eine Überwachung 102 einer sich in der Rückhaltewanne 9 befindlichen Flüssigkeit auf Vorhandensein von Kühlmittel statt. Ferner findet gemäß dem Pfeil 109 eine Überwachung der Gasatmosphäre 21 eines Akkumulatormoduls 2 statt, um etwaige in der Gasatmosphäre 21 befindliche gasförmige Anteile von ausgetretenem Elektrolyt detektieren zu können.

Hinsichtlich der Kühlmitteldetektion findet bei 103 eine Ergebnisabfrage der gemäß 102 durchgeführten Überwachung statt. Ist das Ergebnis negativ, wird die Überwachung gemäß des Pfeils 104 weiter fortgeführt. Andernfalls erfolgt gemäß dem Pfeil 105 eine Auswertung des Überwachungsergebnisses.

In gleicher Weise wird hinsichtlich der Elektrolytdetektion verfahren. Bleibt die bei 110 durchgeführte Überwachung im Ergebnis bei 111 ohne Befund, so wird die Überwachung gemäß des Pfeils 112 weiter fortgeführt. Andernfalls findet in Entsprechung des Pfeils 113 bei 106 eine Auswertung des Überwachungsergebnisses statt.

Sofern bei 107 festgestellt wird, dass sich in der Rückhaltewanne 9 Kühlmittel befindet und/oder in der Gehäuseatmosphäre gasförmige Anteile an Elektrolyt befinden, so erfolgt gemäß 108 eine Sperrung des Ventils 18 zum Verschließen der Wasserablauföffnung 19. In Ergänzung hierzu kann auch noch ein Alarmgeber eingeschaltet werden, sodass verwenderseitig wahrnehmbar zur Erkennung gebracht wird, dass ein Undichtigkeitsfall gegeben ist.

### Bezugszeichen

- 1: Akkumulatoreinrichtung
- 2: Akkumulatormodul
- 3: elektronische Einrichtung
- 4: Trageinrichtung
- 5: Fundamentstreifen
- 6: Längsbalken
- 7: Anschlussstück
- 8: Querbalken
- 9: Rückhaltewanne
- 10: Gehäuse
- 11: Höhenrichtung
- 12: Sockelelement
- 13: Bodenteil
- 14: Randkante
- 15: Querrichtung
- 16: Durchbruch
- 17: Umrandung
- 18: Ventil (Magnetventil)
- 19: Wasserablauföffnung
- 20: Kühlmittelsensor
- 21: Gehäuseatmosphäre
- 22: Elektrolytsensor
- 23: Sensoreinheit
- 24: Vergleichseinrichtung
- 25: Elektrolyt
- 26: Detektion
- 27: Signal
- 28: Vergleichssignal
- 29: Sperrsignal
- 100: Start
- 101: Pfeil
- 102: Überwachung
- 103: Ergebnis
- 104: Pfeil
- 105: Pfeil
- 106: Auswertung
- 107: Ergebnis
- 108: Aktion
- 109: Pfeil
- 110: Überwachung
- 111: Ergebnis
- 112: Pfeil
- 113: Pfeil

## Patentansprüche

1. Stationäres Akkumulatormodul für eine Aufstellung im Außenbereich, mit einem Gehäuse (10), einer Mehrzahl von im Gehäuse (10) angeordneten Akkumulatoren und einer in Höhenrichtung (11) unterhalb des Gehäuses (10) angeordneten Rückhaltewanne (9), wobei die Rückhaltewanne (9) eine Wasserablauföffnung (19) aufweist und wobei ein Ventil (18) zum Öffnen und Schließen der Wasserablauföffnung (19) vorgesehen ist, **dadurch gekennzeichnet, dass** innerhalb des Gehäuses (10) ein Elektrolytsensor (22) angeordnet ist, wobei der Elektrolytsensor (22) in kommunikationstechnischer Verbindung mit dem Ventil (18) steht und dazu eingerichtet ist, im Elektrolytdetektionsfall das Ventil (18) für ein Schließen der Wasserablauföffnung (19) zu sperren.

2. Akkumulatormodul nach Anspruch 1, **dadurch gekennzeichnet, dass** der Elektrolytsensor (22) eine Sensoreinheit (23) und eine Vergleichseinrichtung (24) aufweist, wobei die Sensoreinheit (23) dazu eingerichtet ist, etwaigen in der vom Gehäuse (10) umgebenden Atmosphäre (21) enthaltenen Elektrolyt (25) zu detektieren und ein entsprechendes Signal (27) abzugeben, und wobei die Vergleichseinrichtung (24) dazu eingerichtet ist, dieses Signal (27) mit einem vorgebbaren Vergleichssignal (28) zu vergleichen und bei Gleichheit das Ventil (18) zu sperren.

3. Akkumulatormodul nach Anspruch 2, **dadurch gekennzeichnet, dass** die Sensoreinheit (23) und die Vergleichseinrichtung (24) zu einer elektronischen Baukomponente zusammengefasst sind.

4. Akkumulatormodul nach Anspruch 2 oder 3, **dadurch gekennzeichnet, dass** die Sensoreinheit (23) einen Gassensor aufweist.

5. Akkumulatormodul nach einem der vorhergehenden Ansprüche, **dadurch gekennzeichnet, dass** das Ventil (18) ein magnetisch schaltendes Ventil (18) ist.

6. Akkumulatormodul nach einem der vorhergehenden Ansprüche, **gekennzeichnet durch** eine Kühleinrichtung mit einem in einem Kühlkreislauf umgewälzten Kühlmittel.

7. Akkumulatormodul nach Anspruch 6, **dadurch gekennzeichnet, dass** das Ventil (18) mit einem Kühlmittelsensor (20) in kommunikationstechnischer Verbindung steht.

8. Akkumulatormodul nach Anspruch 7, **dadurch gekennzeichnet, dass** der Kühlmittelsensor (20) dazu eingerichtet ist, im Kühlmitteldetektionsfall das Ventil (18) für ein Schließen der Wasserablauföffnung (19) zu sperren.

9. Akkumulatormodul nach einem der vorhergehenden Ansprüche, **gekennzeichnet durch** einen von der Rückhaltewanne (9) bereitgestellten Pegelsensor, der dazu eingerichtet ist, den Pegelstand einer sich in der Rückhaltewanne (9) ansammelnden Flüssigkeit zu erfassen.

10. Akkumulatormodul nach einem der vorhergehenden Ansprüche, **gekennzeichnet durch** einen Alarmgeber, der in kommunikationstechnischer Verbindung mit dem Elektrolytsensor (22), dem Kühlmittelsensor (20) und/oder dem Pegelsensor steht.

11. Verfahren zum Betrieb eines Akkumulatormoduls nach einem der vorhergehenden Ansprüche 1 bis 10, bei dem die Gehäuseatmosphäre (21) vom Elektrolytsensor (22) überwacht wird, bei dem im Elektrolytdetektionsfall ein entsprechendes Signal (29) vom Elektrolytsensor (22) abgegeben wird und bei dem das Ventil (18) aufgrund des vom Elektrolytsensors (22) abgegebenen Signals (29) für ein Schließen der Wasserablauföffnung (19) gesperrt wird.

12. Verfahren nach Anspruch 11, bei dem eine von der Rückhaltewanne (9) zurückgehaltene Flüssigkeit vom Kühlmittelsensor (20) überwacht wird, bei dem im Kühlmitteldetektionsfall ein entsprechendes Signal vom Kühlmittelsensor (20) abgegeben wird und bei dem das Ventil (18) aufgrund des vom Kühlmittelsensors (20) abgegebenen Signals für ein Schließen der Wasserablauföffnung (19) gesperrt wird.

13. Verfahren nach Anspruch 11 oder 12, bei dem der Pegelstand einer von der Rückhaltewanne zurückgehaltenen Flüssigkeit vom Pegelsensor überwacht wird, bei dem im Falle der Detektion eines vorgebbaren Pegelmaximalstandes ein entsprechendes Signal vom Pegelsensor abgegeben wird und bei dem ein Alarmgeber aufgrund des vom Pegelsensor abgegebenen Signals eingeschaltet wird.
